Europäisches Patentamt

European Patent Office

Office européen des brevets

(19)

(11) Veröffentlichungsnummer: **0 243 516**

A1

## (12) EUROPÄISCHE PATENTANMELDUNG

(21) Anmeldenummer: 86105837.8

(22) Anmeldetag: 28.04.86

(51) Int. Cl.4: **B29C 47/06** , B29C 47/20

(43) Veröffentlichungstag der Anmeldung:
04.11.87 Patentblatt 87/45

(84) Benannte Vertragsstaaten:
AT BE CH DE FR GB IT LI LU NL SE

(71) Anmelder: UNICOR GmbH Rahn
Plastmaschinen
Industriestrasse 56
D-8728 Hassfurt(DE)

(72) Erfinder: Grüll, Helmut
Kleinsteinach 82
D-8729 Riedbach(DE)
Erfinder: Rahn, Horst
Ostpreussenstrasse 7
D-8729 Königsberg/Bayern(DE)

(74) Vertreter: Marx, Lothar, Dr. et al
Patentanwälte Schwabe, Sandmair, Marx
Stuntzstrasse 16 Postfach 86 02 45
D-8000 München 80(DE)

(54) Vorrichtung zum Extrudieren eines doppelwandigen Kunststoffrohres.

(57) Bei einer Vorrichtung zum Extrudieren eines doppelwandigen Kunststoffrohres aus einem nur von einem Extruder gespeisten, geraden Schmelzestrom ist der diesen Schmelzestrom in zwei koaxiale rohrförmige Schmelzeströme teilende Hohldorn (7) mit Hilfe der Stege des den Innendorn (6) tragenden Dornhalters (3) gehalten und fixiert.

Fig. 1

EP 0 243 516 A1

## Vorrichtung zum Extrudieren eines doppelwandigen Kunststoffrohres

Gegenstand der Erfindung ist eine Vorrichtung zum Extrudieren eines doppelwandigen Kunststoffrohres mit den Merkmalen des Oberbegriffs des Anspruchs 1.

Doppelwandige Kunststoffrohre werden in steigendem Maße eingesetzt. So werden beispielsweise derartige Rohre, bei denen das äußere Rohr in gewissen Abständen auf das innere Rohr durch entsprechende Sicken abgestützt ist und auch gewellt sein kann, als Isolierrohre verwendet. Auch werden Rohre mit glattem Innenrohr und in Umfangsrichtung gewellter Außenwand vielfach als Abflußrohre und Dränagerohre eingesetzt.

Bei der Herstellung derartiger Doppelwandrohre hat man bisher Extrusionsanordnungen mit zwei Extrudern verwendet, wobei ein "gerader" Extruder das Innenrohr extrudierte und ein zweiter Extruder mit einem die Düse des ersten Extruders umgebenden Querspritzkopf vorgesehen war, mit dessen Hilfe um das Innenrohr herum das Außenrohr extrudiert wurde. Die spätere Einbringung der Querwellung in das noch weiche Außenrohr erfolgt mittels üblicher, für diesen Zweck allgemein bekannter Vorrichtungen.

Die bekannten Extrusionsvorrichtungen arbeiteten einwandfrei. Sie haben jedoch den wesentlichen Nachteil, daß wegen der erforderlichen zwei Extruder der Aufwand außerordentlich hoch ist. Des weiteren war bei den Zwei-Extruder-Einrichtungen zum Erzeugen von Doppelwandrohren das Schließen des vom Querextruder kommenden Kunststoffstranges im Querspritzkopf schwierig, da im Schließbereich Inhomogenitäten entstehen konnten, welche die Festigkeit des fertigen Außenrohres beeinträchtigten.

Diese Nachteile der bekannten Einrichtungen mit Coextrusionskopf werden durch eine Extrusionsvorrichtung gemäß der AT-PS 374 737 beseitigt, welche die Merkmale des Oberbegriffs des Anspruchs 1 aufweist. Bei dieser Vorrichtung ist nur noch ein Extruder erforderlich, der einen geraden Extrusionskopf aufweist, also einen Extrusionskopf, dessen Achse mit der Achse des Extruders zusammenfällt. Zur Erzeugung zweier konzentrischer Kunststoffströme ist bei der bekannten Vorrichtung in dem Bereich des Schmelzekanals, in welchem der hier zur Unterscheidung als Innendorn bezeichnete Dorn der Extrusionsdüse und auch der Düsenkanal im wesentlichen zylindrisch verlaufen, ein rohrförmiger Hohldorn vorgesehen, der mit seiner kreisförmigen stromaufwärts gerichteten Kante den ankommenden Kunststoffstrom in zwei konzentrische Ströme teilt, die durch den Hohldorn voneinander getrennt den ebenfalls konzentrischen Düsenöffnungen zuströmen. Das Problem der Halterung des Hohldorns ist bei der aus der AT-PS bekannten Vorrichtung dadurch gelöst, daß, so wie zum Halten des Innendorns ein Dornhalter mit radial nach innen ragenden Haltestegen vorgesehen ist, welche den Innendorn in seinem verdickten Anfangsbereich halten, ebenfalls vom Mantel der Düse her Stege radial nach innen ragen, welche den Hohldorn nahe seines stromaufwärts befindlichen Endes von außen her halten.

Diese im Prinzip einleuchtende Konstruktion bedingt in der Praxis erhebliche Schwierigkeiten, da der Hohldornhalter sowohl mit dem Düsenmantel als auch mit dem Zwischendorn in einem Stück ausgebildet ist. Dadurch wird die Konstruktion kompliziert und aufwendig und das Auswechseln des Düsenmantels zwingt auch zum Auswechseln des Hohldorns und umgekehrt.

Der Erfindung will diese Mängel vermeiden. Insbesondere will sie eine Vorrichtung mit den Merkmalen des Oberbegriffs des Anspruchs 1 - schaffen, welche sich durch einfachen Aufbau und damit geringen Herstellungsaufwand und leichte Auswechselbarkeit der Dornanordnung und des Düsenmantels unabhängig voneinander auszeichnet.

Gemäß der Erfindung wird dies dadurch erreicht, daß der Hohldorn sich axial vom Dornhalter bis zu den Düsenöffnungen erstreckt und vom Dornhalter getragen ist. Auf diese Weise können der Innendorn und der Hohldorn zusammen mit dem Dornhalter eine Einheit bilden, wobei sich die zusätzlichen Elemente zum Halten des Hohldorns auf entsprechende Verbindungselemente zwischen dem Dornhalter und dem Hohldorn beschränken. Da gesonderte Stege zum Halten des Hohldorns nicht mehr erforderlich sind, entfällt auch der durch diese Stege verursachte erhöhte Strömungswiderstand im Schmelzekanal für das Außenrohr und es entfallen auch die Störungen dieser Strömung, die durch Stege nun einmal unvermeidbar verursacht werden. Wie die Zeichnung zeigt, kann der Aufbau eines Extrusionskopfes nach der Erfindung sehr einfach sein. Innendorn, Hohldorn und Dornhalter sind relativ zueinander zentriert und bilden eine geschlossene Einheit, deren drei Elemente leicht unabhängig voneinander auswechselbar ausgebildet sein können.

Die Vorrichtung nach der Erfindung eignet sich naturgemäß in erster Linie für die Extrusion thermoplastischer Kunststoffe, wie insbesondere PVC oder PE oder deren Mischpolymerisate.

Die Vorrichtung nach der Erfindung kann auch zusammen mit einem Querspritzkopf zur Erzeugung eines dritten äußeren Rohres ausgebildet sein, wenn ein Rohr mit dreifacher Wandung erzeugt werden soll.

Da erhebliche Axialkräfte auf den Hohldorn wirken können, muß dieser fest mit dem Dornhalter verbunden sein. So kann der Hohldorn beispielsweise mittels eines Kragens in eine komplementäre Nut des Dornhalters bzw. der Stege des Dornhalters ragen und dort durch Hartlöten befestigt sein. Der Hohldorn kann ferner beispielsweise auch an seinem dornhalterseitigen Ende radial nach außen ragende Arme aufweisen, die jeweils mit den stromabwärtsliegenden Enden der Stege des Dornhalters fluchten und diese verlängern und zusammen mit dem äußeren ringförmigen Bereich des Dornhalters beispielsweise von einem Haltering für den Dornhalter gegen diesen gespannt und an diesem gehalten werden.
Bevorzugt ist jedoch der Zwischendorn mit dem Dornhalter verschraubt. Die Verschraubung wird dabei vorzugsweise wiederum nicht durch einzelne Schrauben, sondern durch ein in Bezug auf die Dornanordnung konzen trisches Gewinde bewirkt. Eine solche Verbindung ist einfach, kann hohe Kräfte aufnehmen und kann durch Ausbildung entsprechender Schultern zugleich der Zentrierung des Hohldorns relativ zum Dornhalter und damit auch relativ zum Innendorn dienen.

Wenn auch der Dornhalter und der Innendorn dem Grunde nach aus einem Stück gefertigt sein können, wird es bevorzugt, daß der Dornhalter ein gesondertes ringförmiges Bauteil ist, an welchem der Innendorn gesondert lösbar befestigt ist.

Im einfachsten Falle erstrecken sich die Stege des Dornhalters durch den Schmelzekanal zum Innendorn lediglich in Form jeweils in einer Axialebene verlaufender Stege. Hierbei werden jedoch relativ viele Stege benötigt, will man eine ausreichend sichere Befestigung des Hohldorns am Dornhalter erreichen. Gemäß einer bevorzugten Ausführungsform der Erfindung wird daher die Ausbildung so getroffen, daß die Durchströmöffnungen zwischen den Stegen des Dornhalters zwar einströmseitig die ganze radiale Erstreckung des Schmelzekanals einnehmen, sich aber dann abwechselnd radial nach außen und innen zur Abströmseite des Dornhalters hin auf weniger als die halbe radiale Erstreckung des Schmelzekanals verjüngen unter gleichzeitiger Verbreiterung in Umfangsrichtung, so daß abströmseitig etwa in der radialen Mitte des Schmelzekanals am Dornhalter ein rundum laufender Ring stehen bleibt, an welchem der Zwischendorn befestigt ist. Auf diese Weise hat, wenn man einmal annimmt, daß die radiale Erstreckung des erwähnten Ringes etwa gleich einem Drittel der radialen Erstreckung des Schmelzekanals ist, jede Einströmöffnung in den Dornhalterbereich zwischen den Stegen desselben zwar die volle radiale Erstreckung des Schmelzekanals im Einströmbereich, jedoch nur eine relativ geringe Erstreckung in Umfangsrichtung. Im Austrittsbereich ist dafür jedoch jede der Durchtrittsöffnungen in Umfangsrichtung auf fast das Doppelte erweitert, wobei jedoch die Erstreckung in Radialrichtung auf etwa in Drittel reduziert ist. Auf diese Weise wird hier eine gewisse Beschleunigung der Strömung erreicht, die man aber durch entsprechendes Anwachsen der radialen Erstreckung des Schmelzekanals im Bereich des Dornhalters von dessen Einströmseite zu dessen Ausströmseite hin kompensieren kann. Bei dieser Konstruktion überlappen sich also die Austrittsbereiche der Durchtrittsöffnungen für die Schmelze durch den Dornhalter in Umfangsrichtung. Diese relativ schwierig erscheinende Dornhalterkonstruktion ist verhältnismäßig einfach im Feingußverfahren herstellbar. Dem Grunde nach ist aber auch ein Ausfräsen der Durchströmöffnungen möglich, wobei dann allerdings Nacharbeit notwendig wird, wenn Kanten vermieden werden sollen.

Gemäß einer vorteilhaften Weiterbildung der Erfindung ist der Dornhalter mit dem Hohldorn mittels eines gewindetragenden Kragens verschraubt. Bevorzugt ragt dieser Kragen vom Ring ab. Diese Ausbildung ist einfach herstellbar und erlaubt die Aufnahme und Übertragung hoher Kräfte.

Gemäß einer weiteren vorteilhaften Weiterbildung der Erfindung ist der Hohldorn wenigstens auf dem Größteil seiner Länge von zwei konzentrischen Hülsen gebildet, deren äußere mit einem Außengewinde des Kragens und deren innere mit einem Innengewinde des Kragens verschraubt ist. Das erleichtert die Anbringung des Gewindes am Hohldorn erheblich. Ferner können auf diese Weise auch kompliziert geformte Kanäle als Nuten im Inneren des Hohldorns vorgesehen werden, durch welche Druckluft, Stützluft oder ein anderes Gas zu-bzw. abgeleitet werden kann, wie das bei der Erzeugung von Doppelwandrohren mit gewellter Außenwand erforderlich sein kann.

Die Gaszu-und Abfuhr und auch die Wellung des Außenrohres sind nicht Gegenstand der vorliegenden Erfindung. Sie sind hier daher nicht näher erläutert. Sie können beispielsweise gemäß der DE-PS 24 03 618 ausgebildet sein.

Der Innendorn weist gemäß einer vorteilhaften Weiterbildung der Erfindung einen sich im wesentlichen stromaufwärts des Dornhalters erstreckenden Zulaufteil und einen sich im wesentlichen stromabwärts des Dornhalters erstreckenden Hauptteil auf, wobei beide Teile auf den Dornhalter abgestützt und zentriert und gegeneinander gespannt sind.

Nachfolgend ist die bevorzugte Ausführungsform der Erfindung als erläuterndes Beispiel anhand der beigefügten, zum Teil - schematischen Zeichnungen beschrieben.

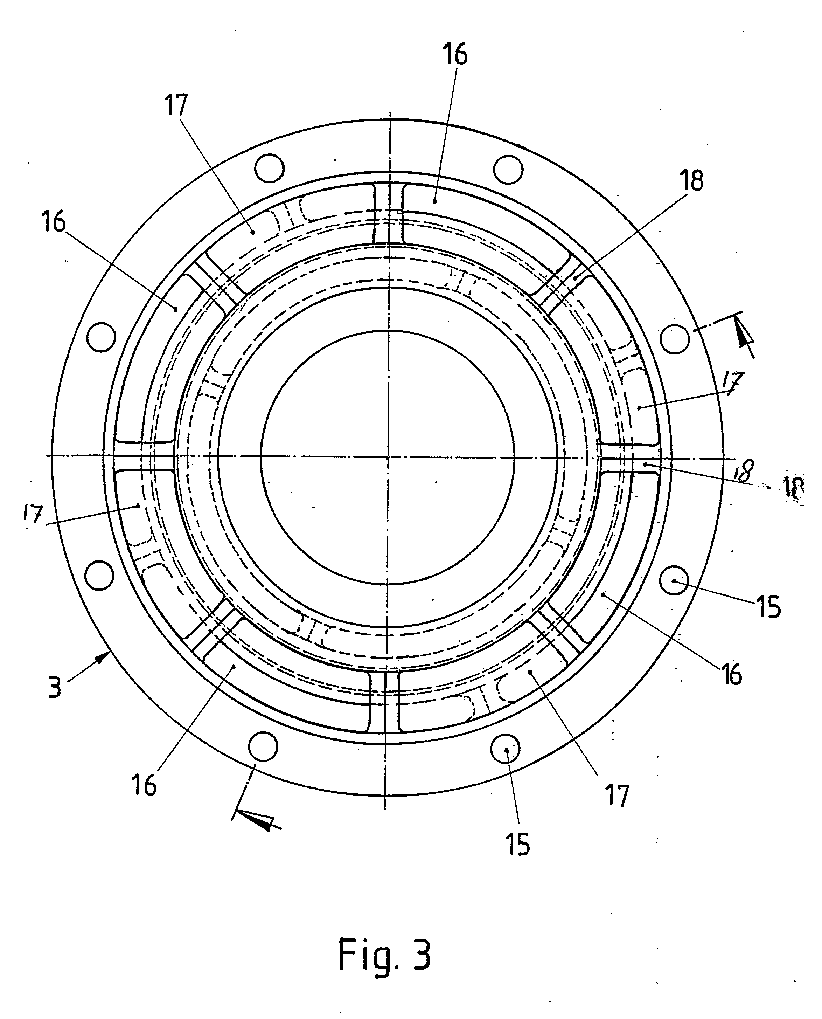

Figur 3 zeigt einen Axialschnitt durch den Extrusionskopf einer Vorrichtung nach der Erfindung, wobei der Einfachheit halber die untere Hälfte unter der Mittellinie nicht dargestellt ist.

Figur 2 zeigt in gegenüber Figur 1 vergrößertem Maßstab einen Axialschnitt durch den Dornhalter.

Figur 3 zeigt die Ansicht von links auf Figur 2.

Figur 4 zeigt noch einmal die obere Hälfte von Figur 3, wobei jedoch der Übersichtlichkeit halber alle unsichtbaren Kanten mit Ausnahme der unsichtbaren Kanten für einen Luftzuführungskanal und der die Durchströmkanäle durch den Dornhalter begrenzenden unsichtbaren Kanten nicht gezeigt sind.

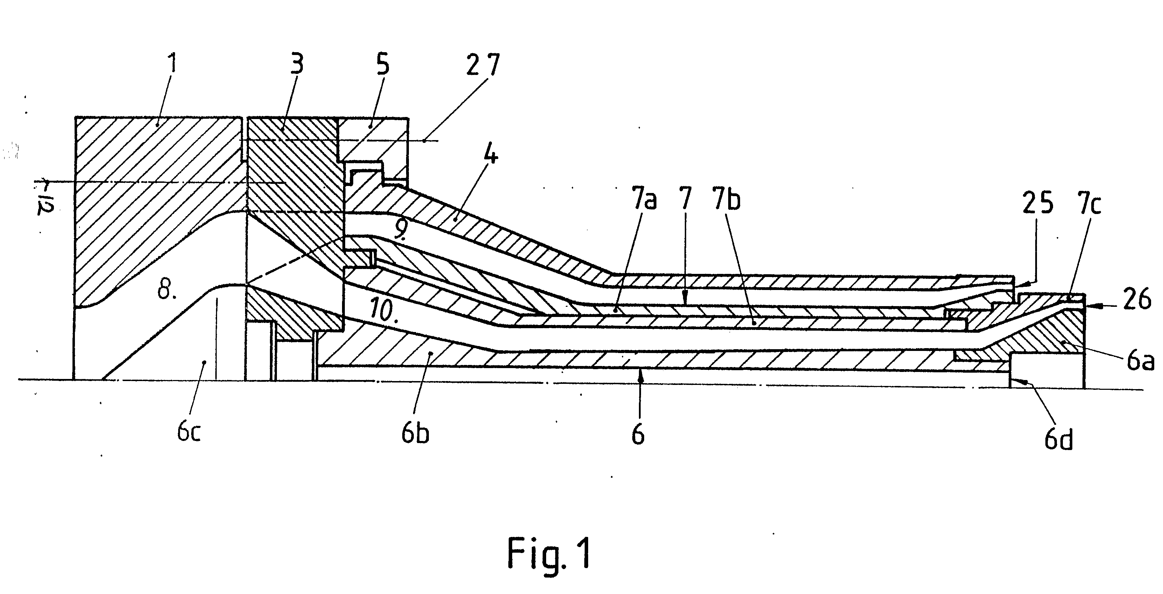

Der in den Zeichnungen gezeigte, in seiner Gesamtheit nur in Figur 1 gezeigte Extrusionskopf besteht im wesentlichen aus einem Adapterstück 1 das mit seiner in Figur 1 linken Stirnfläche 2 gegen die entsprechende Stirnfläche eines Schneckenextruders geflanscht ist, einem Düsenmantel 4, der mittels eines von angedeuteten Schrauben am äußeren Bereich des Dornhalters 3 befestigten Spannringes 5 gegen den Dornhalter und damit auch gegen das Adapterstück festgespannt ist, einem vom Dornhalter abragenden Innendorn 6 und einem innerhalb des Düsenmantels 4 koaxial zum Innendorn 6 verlaufenden Hohldorn 7, welcher den im Prinzip rohrförmigen Schmelzekanal 8 stromabwärts des Dornhalters in zwei konzentrische Schmelzekanäle 9 und 10 teilt, aus deren in Figur 1 rechten Enden die Kunststoffschmelzestränge zur Bildung der beiden konzentrischen Rohre austreten.

Dem beschriebenen Extrusionskopf können entsprechende Verarbeitungselemente wie z.B. Korrugierwerkzeuge für das Außenrohr nachgeschaltet sein.

Wie aus der Zeichnung ersichtlich, erstreckt sich der Hohldorn 7 vom Dornhalter 3 bis zu den Düsenaustrittsöffnungen 25 und 26. Der Schmelzekanal 8, der bei seinem Eintritt in den Kopf noch einen relativ geringen Durchmesser hat, erweitert seinen Durchmesser dann zunächst stark, da in ihm ja auch noch die Dornanordnung untergebracht sein muß und ferner der Strömungsquerschnitt im Bereich des Dornhalters wegen der diesen Querschnitt verringernden den Dorn tragenden Stege 18 des Dornhalters vergrößert sein muß. Stromabwärts des Dornhalters 3 verringert sich dann nicht nur der Durchmesser des Innendorns 6 und auch der des Hohldorns 7, sondern auch der des Düsenmantels 4. An diesen Verjüngungsbereich -

schließt, wie aus Figur 1 ersichtlich, ein relativ langer Bereich mit zylindrischer, koaxialer Ausbildung der beiden Schmelzekanäle 9 und 10 an, die sogenannte Bügelstrecke. Dieser folgt wieder ein kurzer Endbereich beider Schmelzekanäle, in dem der mittlere Durchmesser dieser Kanäle wieder vergrößert wird. Dadurch wird eine Resttendenz der ja auch in flüssigem Zustand elastischen Schmelze, sich wieder auf einen größeren Durchmesser auszudehnen, ausgeglichen.

Der Dornhalter 3 ist mittels nur schematisch angedeuteter Schrauben 12 gegen das Adapterstück gespannt. Er kann gegen dieses formschlüssig zentriert sein, oder aber auch durch entsprechendes Einstellen und Justieren der Lage des Dornhalters.

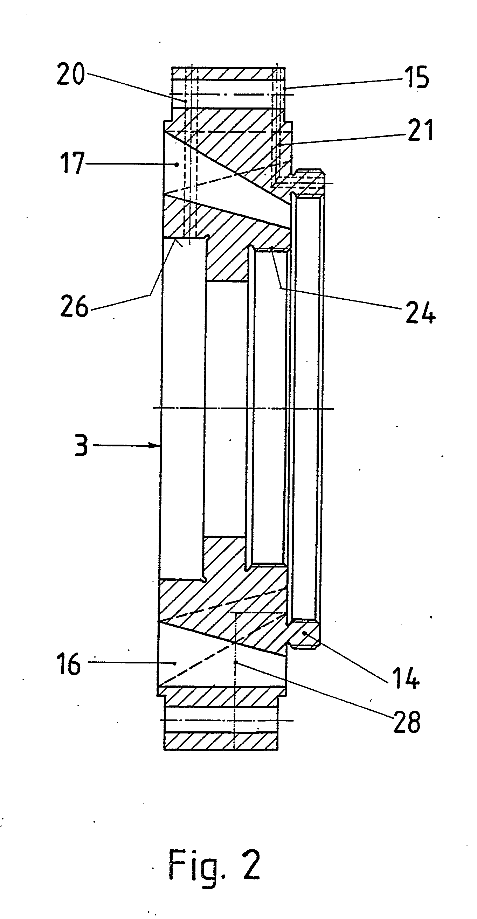

Der Dornhalter 3 hat im Prinzip die Form eines Ringes mit parallelen Stirnflächen, wobei die in Bezug auf den Schmelzestrom stromabwärts liegende Stirnfläche einen Kragen 14 trägt, der sowohl auf seiner radial inneren als auch seiner radial äußeren Seite wie aus Figur 2 ersichtlich mit Gewinde versehen ist, auf welches die beiden koaxialen Teile 7a und 7b des Hohldorns 7 jeweils, wie aus Figur 1 ersichtlich, aufgeschraubt sind. Um eine einwandfreie Zentrierung der beiden Teile des Hohldorns 7 zu gewährleisten, kann der Kragen 14 in Figur 2 beispielsweise rechts noch eine kurze gewindefreie Verlängerung tragen, gegen welche entsprechende Innenflächen der beiden Teile des Hohldorns dann zentrierend anliegen.

Bei 15 sind Durchgangslöcher für Befestigungsschrauben 27 gezeichnet.

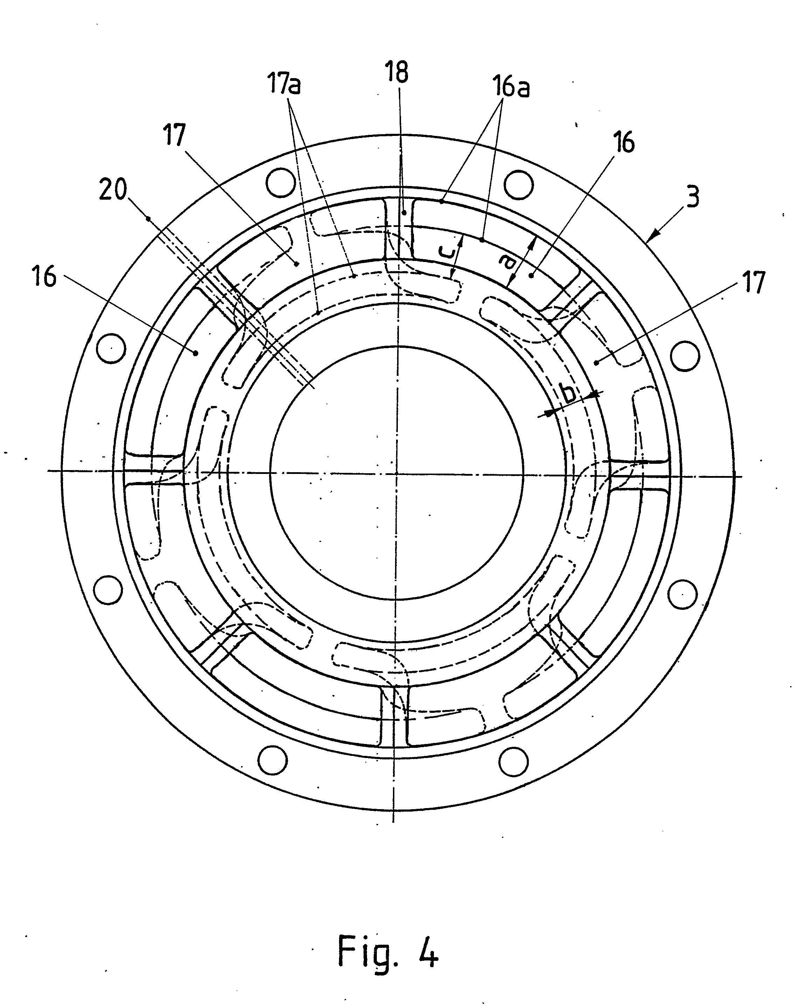

Zwischen den beiden Stirnflächen des Dornhalters 3 verlaufen, wie am besten aus Figur 2 ersichtlich, abwechselnd radial nach außen und nach innen geneigte Durchströmkanäle 16 bzw. 17. Zwischen den Durchströmkanälen erstrecken sich jeweils die Stege 18, die im Einströmbereich des Dornhalters im wesentlichen radial verlaufen, sich danach jedoch verwinden, da sich, wie am besten aus Figur 4 ersichtlich, die in Strömungsrichtung radial nach innen geneigt verlaufenden Durchströmöffnungen 17 in Umfangsrichtung auf fast das Doppelte verbreitern, so daß die Austrittsöffnung dieser Kanäle, die bei 17a in Figur 4 gezeigte Kontur aufweist. In gleichem Sinne verbreitern sich die nach außen in Strömungsrichtung geneigt verlaufenden Durchströmkanäle 16 auf das Doppelte, so daß deren Austrittsöffnungen die in Figur 4 zum Teil sichtbare, zum Teil nur strichpunktiert angedeutete Kontur 18a aufweisen.

Wie ebenfalls am besten aus Figur 4 ersichtlich, überlappen sich die Austrittsbereiche der Kanäle 16 und 17 um ein erhebliches Maß, um die Verringerung der radialen Erstreckung dieser Kanäle vom Maß a am Eintritt auf das Maß b am Austritt wenigstens zum Teil auszugleichen. Die zwischen den Kanälen stehengebliebenen Stege 18 sind am Einlauf scharfkantig und verlaufen bis in den Auslaufbereich nach den allgemeinen Prizipien der Strömungslehre.

Möglichkeiten für die Zuführung von Zu-und Abluft in den Bereich zwischen den Rohren und innerhalb des inneren Rohres mit Hilfe der Kanäle 20 und 21 sind in Figur 2 und 4 angedeutet.

Wie am besten aus Figur 4 ersichtlich, lassen die Austrittsöffnungen der Durchströmkanäle 16 und 17 radial zwischen sich einen rundum laufenden Ringbereich stehen, dessen radiale Erstreckung in Figur 4 bei c angedeutet ist. Von diesem Ringbereich ragt der Kragen 14 ab.

Die soeben erläuterte Gestaltung der Durchströmkanäle bzw. der durch die Begrenzungsflächen dieser Durchströmkanäle definierten Stege 18 erlaubt eine günstige Verteilung des Schmelzestroms auf die beiden Schmelzekanäle 9 und 10 und bewirkt zugleich eine vorteilhafte Durchmischung der Schmelze in diesen beiden Kanälen.

Der Düsenmantel 4 kann gegen den Dornhalter 3 mittels einer entsprechenden Schulter zentriert, oder aber frei ausrichtbar durch den Spannring 5 gehalten sein.

Der auf den Kragen 14 aufgeschraubte Hohldorn 7 besteht aus einem äußeren Hohldornrohr 7a und einem inneren Hohldornrohr 7b. Jedes Rohr ist mit dem Kragen 14 verschraubt und gegen diesen zentriert. Um im Austrittsbereich der Düsenöffnungen die oben angedeutete Vergrößerung des Durchmessers der beiden Schmelzeströme bewirken zu können, ist das äußere Rohr 7a vor der Austrittsöffnung erweitert. Da sich auch der Schmelzekanal 10 im Austrittsbereich wieder nach außen erweitert, ist um eine Montage der beiden Rohre 7a und 7b zu ermöglichen, das Düsenöffnungsseitige Ende des Innenrohres 7b von einem gesonderten Teil 7c gebildet, das nachträglich aufgeschraubt ist und zugleich auch das austrittseitige Ende des äußeren Rohres 7a zentriert.

Aus dem gleichen Grunde ist auch die Erweiterung des Innendorns 6 am Austrittsende durch ein gesondertes Bauteil 6a gebildet, das auf den Innendorn 6 aufgeschraubt ist. Der Innendorn 6 besteht aus einem Hauptteil 6b, das auch das Endteil 6a trägt und einem Stirnteil 6c. Das Hauptteil 6b ist mit dem Innengewinde 24 (Figur 2) des Dornhalters verschraubt und gegen diesen in geeigneter Weise zentriert. Das Stirnteil 6c des Innendorns 6 ragt mit einem Kragen zentriert in den Rezess 26 des Dornhalters und ist an diesem mittels einer Zugschraube gehalten, die einerseits in das Teil 6c eingeschraubt ist und andererseits an der Fläche 6d des Innendornhauptteils 6b anliegt.

Wie aus obigem ersichtlich, trägt der Dornhalter einwandfrei geführt und zentriert bei der erfindungsgemäßen Ausbildung nicht nur den Innendorn, sondern auch den Hohldorn.

Bei der Erfindung muß der Hohldorn nicht notwendig unmittelbar vom Dornhalter getragen sein. Er kann vielmehr auch nur am Dornhalter gelagert sein. So kann z.B. der gezeigte Dornhalter 3 durch eine Trennfuge,wie sie in Figur 2 strichpunktiert bei 28 eingezeichnet ist, in zwei Teile geteilt sein, wobei dann der den Kragen 14 tragende Teil streng genommen nicht mehr zum Dornhalter 3 gehört, da dieser Teil ja nicht mehr den Innendorn trägt.

Die Erfindung ist nicht auf die Herstellung von runden Rohren beschränkt. Das Düsenprofil kann auch unrund, beispielsweise Tunnelprofil, sein.

## Ansprüche

1. Vorrichtung zum Extrudieren eines doppelwandigen Kunststoffrohres, insbesondere eines derartigen Rohres mit glatter Innenwand und quergewellter Außenwand, mit nur einem Extruder und einem diesem nachgeschalteten geraden Extrusionskopf, der eine Düse (4) aufweist, in welcher sich ein von einem Dornhalter (3) mittels von außen nach innen ragender Stege (18) getragener Innendorn (6) erstreckt, wobei ein den Innendorn (6) im Abstand umgebender Hohldorn (7) vorgesehen ist, der den um den Innendorn (6) axial strömenden Kunststoffstrom in einem inneren und einem zu diesem koaxialen äußeren Strom (10, 9) den Düsenöffnungen (25,26) zuströmen läßt, **dadurch gekennzeichnet,** daß der Hohldorn (7) sich axial vom Dornhalter (9) bis zu den Düsenöffnungen (25, 26) erstreckt und am Dornhalter (9) befestigt ist.

2. Vorrichtung nach Anspruch 1, **dadurch gekennzeichnet,** daß der Hohldorn (7) mit dem Dornhalter (3) verschraubt ist.

3. Vorrichtung nach Anspruch 1 oder 2, **dadurch gekennzeichnet,** daß die Durchströmöffnungen (16, 17) zwischen den Stegen (18) des Dornhalters (3) einströmseitig die ganze radiale Erstreckung des Schmelzekanals (8) einnehmen und sich abwechselnd radial nach außen und innen zur Abstömseite des Dornhalters (3) hin verjüngen unter gleichzeitiger Verbreiterung in Umfangsrichtung, so daß abströmseitig in der radialen Mitte des Schmelzekanals am Dornhalter (3) ein rundumlaufender Ring (c) stehen bleibt, an dem der Zwischendorn (7) befestigt ist.

4. Vorrichtung nach einem der Ansprüche 1 bis 3, **dadurch gekennzeichnet,** daß der Dornhalter (3) und der Hohldorn (7) mittels eines Gewinde tragenden Kragens (14) miteinander verschraubt sind.

5. Vorrichtung nach Anspruch 4, **dadurch gekennzeichnet,** daß der Kragen (14) vom Ring (c) abragt.

6. Vorrichtung nach Anspruch 5, **dadurch gekennzeichnet,** daß der Zwischendorn (7) wenigstens auf dem Großteil seiner Länge von zwei konzentrischen Hülsen (7a, 7b) gebildet ist, deren äußere mit einem Außengewinde des Kragens (14) und deren innere mit einem Innengewinde des Kragens (14) verschraubt ist.

7. Vorrichtung nach einem der Ansprüche 1 bis 6, **dadurch gekennzeichnet,** daß der Innendorn (6) einen sich im wesentlichen stromaufwärts des Dornhalters (3) erstreckenden Zulaufteil (6c) und einen sich im wesentlichen stromabwärts des Dornhalters (3) erstreckenden Hauptteil (6b) aufweist, und daß beide Teile (6a, 6b) am Dornhalter (3) abgestützt und gegeneinander gespannt sind.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 994 567 (GOSUDARSTVENNY NAUCHNO-ISSLEDOVATELSKY INSTITUTE PLASTICHESKYKH MASS) * Abbildungen 1,3,4 * | 1,2 | B 29 C 47/06 B 29 C 47/20 |
| Y | | 3-7 | |
| | --- | | |
| A | EP-A-0 113 041 (H. UPMEIER) * Ansprüche; Abbildungen 1-3,6-8 * | 1 | |
| Y | | 3-7 | |
| | --- | | |
| A | US-A-3 756 758 (G.M. PRALL) * Ansprüche; Abbildungen 2-5 * | 1,3 | |
| | --- | | RECHERCHIERTE SACHGEBIETE (Int. Cl.4) |
| A | US-A-3 802 825 (H. UPMEIER) * Anspruch 1; Abbildungen 1,2 * | 3 | B 29 C 47 |
| | --- | | |
| A | DE-A-2 528 278 (E. GREINER) * Abbildung * | 1 | |
| | --- | | |
| A | CH-A- 392 867 (STANNIOLFABRIK BURGDORF AG) * Abbildung 1 * | 1 | |
| | --- | | |
| A | CH-A- 491 737 (CONDUCO AG) * Abbildungen 1-3 * | 1,3 | |
| | --- -/- | | |

Der vorliegende Recherchenbericht wurde für alle Patentansprüche erstellt.

| Recherchenort DEN HAAG | Abschlußdatum der Recherche 06-01-1987 | Prüfer BELIBEL C. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | FR-A-2 421 048 (CINCINNATI MILACRON AUSTRIA AG) & AT-A-374 737 <br><br> --- | 1 | |
| A,D | DE-A-2 403 618 (FRÄNKISCHE ISOLIERROHR- & METALLWAREN-WERKE) <br><br> ----- | 1 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 06-01-1987 | BELIBEL C. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82